# EUROPEAN PATENT SPECIFICATION

(11) **EP 1 610 664 B1**
(45) Date of publication and mention of the grant of the patent: **04.10.2006**
(21) Application number: 04723634.4
(22) Date of filing: 26.03.2004
(51) Int. Cl.: A47L 23/26

(54) **DUST CONTROL MAT**
STAUBBEKÄMPFUNGSMATTE
TAPIS ANTIPOUSSIERE

(30) Priority: 04.04.2003 GB 0307828
(43) Date of publication of application: 04.01.2006
(73) Proprietor: MILLIKEN INDUSTRIALS LIMITED, Wigan, Lancashire WN6 8RN (GB)
(72) Inventor: HEDLEY, Terence, Michael, Bedforshire LU7 OTE (GB)
(74) Representative: Raynor, Simon Mark
(86) International application number: PCT/GB2004/001316
(87) International publication number: WO 2004/086933

(56) References cited:
- EP-A- 1 055 757
- EP-A- 1 184 499
- WO-A-02/078508
- DE-U- 29 603 229
- US-A- 3 015 149
- US-A- 5 870 785

## Description

The present invention relates to a dust control mat, and in particular to one having a high dust capacity. The invention also relates to a method of making such a mat.

Dust control mats are usually placed at the entrances to shops, offices and factories to remove dust and moisture from the feet of pedestrians entering the building. By the term "dust" we mean all kinds of solid particulate dirt, including sand, grit and other contaminants.

A common dust control mat comprises a tufted pile textile top surface having good moisture and dirt absorbing properties, which is bonded to a backing layer of vulcanised rubber. Various different textile materials are available, including synthetic materials such as high twist nylon and natural fibres such as cotton. These textiles have different performance characteristics. For example, nylon mats have very good dust control properties and are hard wearing, but they do not have very good moisture absorbing properties. Cotton mats on the other hand have very good moisture absorbing properties, but have inferior dust control properties and tend to be less durable than nylon mats. Both types of mat have only a limited dust capacity (i.e. they are capable of absorbing only a limited quantity of dust) and they must therefore be cleaned regularly.

Dust control mats of the type described above are generally washable by immersion and agitation in water. Many such mats are used in the industrial and rental market sectors. Those mats tend to be owned by a laundry, which rents the mats to its clients and regularly replaces soiled mats with clean mats and returns the soiled mats to the laundry for cleaning. Some mats of the same type are also used in the commercial and retail sectors, in which case they are generally owned by the end user. Often, those mats are not regularly washed, as the owner does not usually have suitable washing facilities.

When a dust control mat is used in a very dusty or dirty environment, it can quickly become heavily contaminated with dust, thereby reducing its effectiveness and adversely affecting its appearance. For mats used in the industrial and rental market sectors this leads to high laundry costs, whereas for mats used in the commercial and retail sectors, thorough cleaning may rarely or never take place. There is a need therefore for a mat with a high dust capacity, which is relatively easy to clean.

Dust control mats sometimes carry a logo or image. A simple logo can be created by forming the textile surface from a mosaic of tufted materials of different colours. Alternatively, a more complicated pattern or image can be applied to the mat by printing the textile surface. However, because the tufted pile can move during and after printing, the observable resolution of the printed image is very low. In practice, the maximum observable resolution that can be achieved is no higher than about 20dpi (dots per inch). The images that can be printed on the mats are therefore limited to relatively simple patterns and logos.

It is known to produce a floor mat with a surface that can carry a higher resolution image, such as a photographic image or an advertising message. Such mats are sometimes called poster mats or advertising mats. These mats generally have a textile surface with either no pile or only a very short pile, since a longer pile is not capable of supporting an image with a high observable resolution. As a result, they generally have poor dust control properties. There is also a need therefore for a mat that is capable of supporting a high resolution image (e.g. with an observable resolution of 75dpi or higher) and that has good dust control properties.

It is also known to provide a highly resilient anti-fatigue mat, for use by workers who have to spend prolonged periods standing in one position. Such mats generally incorporate foam rubber to provide the necessary resilience. An example is described in WO01/74206. Document DE-U-296 03 229 discloses a dust control not according to the preamble of claim 1. According to the present invention there is provided a dust control mat as defined in claim 1.

A spacer fabric is a three dimensional fabric, typically having a thickness of 2 to 20 mm, which comprises two plain ground fabric layers and an intermediate pile layer that interconnects and spaces the two ground fabric layers. Spacer fabrics can be made by warp knitting on a double needlebar Rachel machine. The intermediate pile layer consists of a resilient pile yarn, usually a synthetic monofilament fibre, that extends between the ground fabric layers substantially perpendicular to the faces of the fabric. The intermediate pile layer maintains a substantially uniform separation between the ground fabric layers but is resilient, allowing the spacer fabric to be compressed. Many types of spacer fabric are known, some examples being described in US5385036, US2001/11442, US5817391, US6037035 and US 5896758.

We have found that a spacer fabric provides a highly effective dust control textile, having good dust removal properties and a very large dust capacity. A dust control mat that incorporates a spacer fabric is therefore particularly suitable for use in very dusty environments. The mat can also be cleaned very easily, using a dry mechanical cleaning process (for example, beating, vacuum cleaning or dry tumbling). Further, if washing is required, we have found that the mat drains very well and it can thus be dried with minimal or no tumbling. Cleaning costs are therefore very low.

The mat is also suitable for printing and is capable of carrying a high resolution printed image, owing to the flat and substantially pileless surface of the spacer fabric. It is therefore possible to provide a poster mat that has good dust control properties.

The mat is also highly resilient, providing good anti-fatigue properties, and it is therefore suitable for use by workers who have to stand for prolonged periods in one position.

Advantageously, the first fabric layer comprises a mesh having a number of openings through which dust and dirt can fall into the interior of the textile layer. The openings may have a width of 0.5-10mm, preferably 1-4mm, more preferably 2-3mm. The term "width" as used herein refers to the diameter of a sphere that will pass through the opening. Advantageously, the first fabric layer is a knitted fabric of approximately gauge 11.

The first fabric layer may be made for example of a multifilament yarn, preferably polyester yarn, which provides a very good printing surface, or any other suitable yam.

Advantageously, the first fabric layer is made of a yarn having a decitex of 100-200, preferably 136-167, more preferably approximately 150.

The second fabric layer has a substantially closed structure with denser construction than the first fabric layer, to prevent rubber or adhesive from entering the spacer fabric when bonding the textile layer to the backing layer. Advantageously, the second fabric layer is a knitted fabric of approximately gauge 22 or higher.

Advantageously, the second fabric layer is made of a multifilament yarn, preferably polyester yarn. Advantageously, the second fabric layer is made of a yarn having a decitex of 100-200, preferably 136-167, more preferably approximately 150.

The intermediate pile layer may have a thickness of 2-10 mm, preferably approximately 4-6mm, to provide a good dust capacity and an appropriate degree of resilience.

Advantageously, the intermediate pile layer is made from a monofilament yarn having a diameter in the range 0.04-3mm, preferably 0.05-0.3mm, more preferably 0.1-0.2mm. We have found that this provides an appropriate degree of resilience for a floor mat.

Advantageously, the intermediate pile layer is made from a synthetic monofilament yarn, preferably a polyester yarn.

The textile layer may be a warp knit fabric, preferably a Raschel knit fabric.

The backing layer is bonded to the second fabric layer

The backing layer is made of rubber, preferably nitrile rubber. This provides very good stability and resists slipping, creep and curling of the mat. The thickness of the rubber backing layer may be from 0.5mm to 5mm, preferably 0.8mm to 3mm. The rubber backing layer may be vulcanised to the second fabric layer.

The textile layer may be printed, preferably with sublimatic inks. We have found that a high resolution image may be transferred to the mat using this process. Advantageously, the textile layer is printed with an image having an observable resolution of at least 75dpi. Generally, the textile layer has an area of at least 0.2m² (e.g. 40cm x 50cm) and preferably at least 1m² or larger.

According to a further aspect of the invention there is provided a method of manufacturing a dust control mat, as defined in claim 19.

The spacer fabric may be a knitted fabric, preferably a warp knitted fabric, more preferably a Rachel knit fabric. The first fabric layer comprises a mesh having a number of openings, and the second fabric layer has a substantially closed structure.

The backing layer of rubber is preferably vulcanised to the textile layer in a heated press.

The textile layer is advantageously printed using a sublimatic printing process, preferably during the backing process.

Embodiments of the invention will now be described, by way of example, with reference to the accompanying drawings, in which:
Figure 1 is an isometric view of a spacer fabric;
Figure 2 is an isometric view of a mat according to the invention, and
Figure 3 is a side elevation of a mat assembly laid up in a heated press.

The mat shown in figure 2 includes an upper textile layer 1, which is bonded to a lower backing layer 2, for example of vulcanised nitrile rubber. Optionally, the backing layer may be slightly larger than the textile layer, to provide a rubber border (not shown). The overall size of the mat is typically 85cm x 150cm.

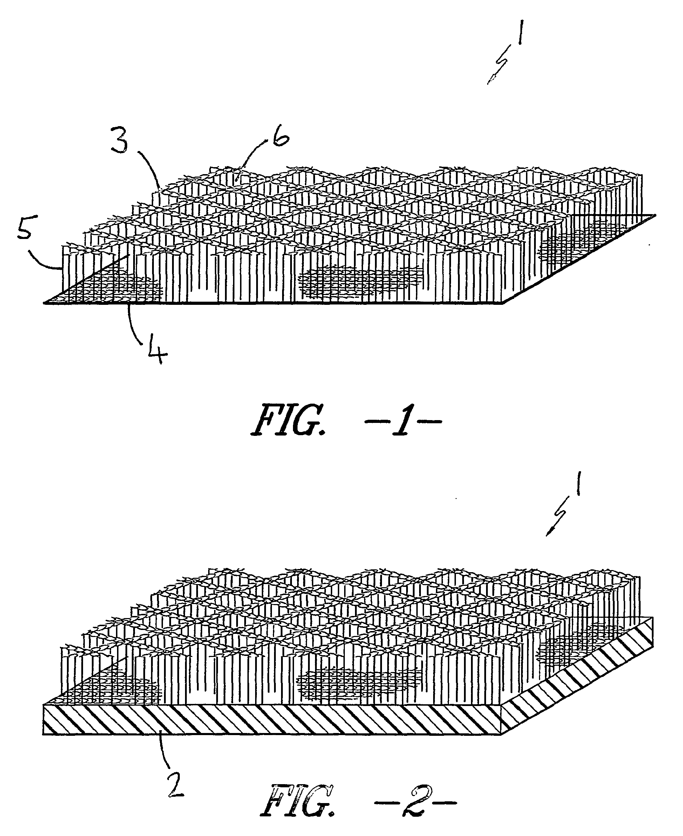

The textile layer 1, which is shown separately in figure 1, comprises a three-dimensional spacer fabric. Such fabrics are well known, some examples being described for instance in US5385036, WO96/32526, US5817391 and US2001/0011442.

The textile layer 1 is constructed by knitting a three dimensional spacer fabric using a double needlebar warp knitting machine, for example of the Raschel type. This produces a double faced spacer fabric comprising a first fabric layer 3 that in use forms the upper surface of the mat, a second fabric layer 4 that forms the lower surface of the textile layer and is bonded to the backing layer 2, and an intermediate pile layer 5 comprising a resilient pile yarn that interconnects and spaces the first and second fabric layers 3,4 from one another. The intermediate layer 5 is resilient, allowing some compression of the textile layer 1, but restoring the separation of the first and second fabric layers 3,4 when the deforming force is removed.

The first fabric layer 3 preferably has an open mesh or net-like structure, with a plurality of openings 6 that allow dust to fall through the layer into the space between the first and second layers. The openings 6 may for example be roughly square in shape or they may be roughly hexagonal or circular, with a width in the range 0.5-10mm, typically 1-4mm and preferably 2-3mm. The upper surface of the first fabric layer 3 is relatively smooth and very stable, allowing it to support a printed image with a high observable resolution. The first fabric layer may for example consist of a Raschel warp knit fabric, made using course and gauge settings to provide a relatively open structure. For example, the construction of the first fabric layer 3 may be 6 course Atlas at 11 gauge, made of 150 decitex polyester multifilament yarn.

The second fabric layer 4 preferably has a dense and substantially closed structure, to provide a coherent foundation that is suitable for bonding to the backing layer 2. There should not be any significant openings in the fabric layer, to avoid any significant ingress of rubber, glue or other bonding substances into the textile layer during the backing process. For example, the construction of the second fabric layer 4 may be 2 bar, full set 22 gauge, tricot stitch, made of 150 decitex polyester multifilament yarn.

The intermediate pile layer 5 may be made of a monofilament yarn, a multifilament yarn or a combination of monofilament and multifilament yarns. Preferably, it is made of polyester or nylon monofilaments having a diameter of 0.1-0.2mm. For example, the construction of the intermediate pile layer may typically be half set 22 gauge, single bar, 5 needle V, using 0.15mm monofilament. The thickness of the intermediate layer 5 is generally 2-10mm, typically 4-6mm. The intermediate layer 5 has a relatively open structure, to provide a large dust capacity.

The backing layer 2 is made of any suitable material that provides the mat with the necessary stability: i.e. which prevents slipping and excessive creep as the mat is walked on, and causes the mat to lie flat on the floor. Preferably, the backing layer is made of a nitrile rubber, having a thickness of 0.5-5mm, preferably 0.8-3mm. The backing layer may be made of solid or foam rubber, orfrom a sheet of bonded rubber granules. Alternatively, it can be made of any other suitable material, such as PVC or latex.

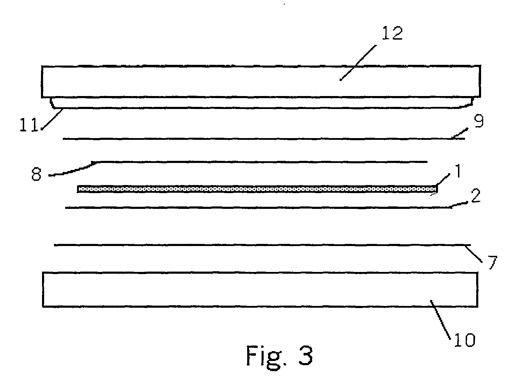

The mat is manufactured by bonding the textile layer 1 to the backing layer 2. If the backing sheet is made of rubber, the mat can be manufactured by vulcanising a sheet of unvulcanised rubber to the textile layer in a heated press. In the method shown in Figure 3, a mat assembly comprising a textile layer 1 and a sheet of unvulcanised rubber for the backing layer 2 is laid up on a bottom release sheet 7, made for example of PTFE-coated woven glass. A print transfer sheet 8 that has been printed with an image using sublimatic dyes may optionally be placed face down on top of the textile layer 1. A top release sheet 9 is placed on top of the mat assembly, which is then placed in a press that includes a heated metal platen 10 and an inflatable diaphragm 11 secured to an upper plate 12.

The laid-up mat assembly is pressed in the heated press, for example at a temperature of 170°C and a pressure of 30 pounds per square inch, applied for a cycle time of up to twenty minutes. The heat from the press softens and vulcanises the rubber, bonding it to the lower surface of the textile layer 1. At the same time, if a print transfer sheet is used, the heat vaporises the sublimatic dyes, transferring the printed image onto the upper surface of the textile layer.

Once this process has been completed, the mat is removed from the press, the release sheets 7,9 are removed and, if necessary, the edges of the backing layer are trimmed. Optionally, the backing layer 2 may be perforated, to allow the passage of water during a spin drying process.

Alternative manufacturing methods include bonding the textile layer to a backing layer, for example of granulated rubber or PVC, using an adhesive, and coating the lower face of the textile with a suitable backing material such as latex.

We have found that a dust control mat according to the present invention, with a textile layer made of a spacer fabric, provides an audible scraping effect that encourages people to wipe their feet, and is highly efficient at removing dust from the feet of pedestrians. The dust falls through the openings in the first fabric layer and is held between the filaments of the intermediate pile layer.

We have also found that the mat has a much higher dust capacity than a conventional tufted nylon dust control mat. For example, in one test, we compared the absorbency of the new mat with that of a conventional tufted nylon dust control mat by filling 100cm² samples with sand and then weighing the samples, to determine the dust capacity of the mat. The results were as follows:
Regular tufted nylon cut pile mat: 4.17 kg/m²
Spacer fabric on rubber backing: 8.13 kg/m²

It therefore appears from this test that dust capacity of the new mat is approximately double that of the conventional tufted dust control mat.

Further, we have found that the mat is relatively easy to clean. The majority of the dust retained by the mat can be removed simply by beating, shaking or dry tumbling the mat, or by cleaning it with a vacuum cleaner. If necessary, the surface appearance can then be restored, either by washing or by applying a surface cleaner. If the mat is washed, we have found that it dries very quickly and easily, thereby possibly avoiding the need for tumble drying or at least greatly reducing the energy required to dry the mat.

We have also found that the upper surface of the first fabric layer is capable of supporting an image with a high observable resolution, since the upper layer of the spacer fabric is stable and smooth, with virtually no pile.

Various modification of the invention are of course possible, some of which will now be described.

Numerous different kinds of spacer fabric may be used, employing different yarns. The intermediate pile layer may for example be made of a number of synthetic monofilament yarns, including polypropylene, polyethylene, polyester and polyamide yarns. The thickness of the monofilament will depend on the required thickness of the mat: for example a yarn with a thickness of 0.05-0.1 mm might be used for a fabric with a thickness of 4-5mm. The monofilament yarns may be all the same material and thickness or, in some circumstances, yarns of different materials and thickness may be used. Alternatively, a multifilament yarn or a combination of monofilament and multifilament yarns may be used. At least some of the yarns making up the intermediate layer may be bowed, to increase the resilience of the textile.

For the first and second outer layers of the spacer fabric, multifilament yarns will generally be used. These may be spun yarns or composite yarns such as core spun yarns, plied yarns or technical yarns. Various natural and synthetic materials may be used including, for example, jute, cotton, polyester and glass. These yarns do not have to be all the same type: a mixture of materials and diameters can be used to provide different characteristics. Further, the yarns of the first and second layers and the intermediate layer may be all the same, or all different.

The yarns may be white, allowing the mat to be printed or dyed, or coloured yarns may be used to produce a single or multi-colour mat. If a printed mat is required, the textile may be printed before, during or after bonding to the backing layer, by any of a variety of suitable printing processes.

A substrate layer, for example of woven or non-woven polyester, may be provided between the textile layer and the backing layer. The edges of the textile layer may optionally be sealed. The mat may have rubber borders or printed "optical" borders, or it may be borderless. The mat may include one or more areas of another fabric, for example a tufted pile fabric or a knitted, woven or non-woven fabric. The upper surface of the textile surface may be sanded, brushed or napped to modify its appearance, feel and dust/moisture control properties. The textile layer may be treated with a hydrophilic agent or a soil release agent.

The backing layer may be made of solid or foam rubber, granulated rubber.

## Claims

1. A dust control mat having a textile layer (1) and a backing layer (2), wherein the textile layer includes a spacer fabric having a first fabric layer (3) that forms the upper surface of the mat, said first fabric layer comprising a mesh having a number of openings, a second fabric layer (4) that forms the lower surface of the textile layer, and an intermediate pile layer (5) that interconnects and spaces the first and second fabric layers; **characterised in that** the backing layer (2) is made of rubber and the second fabric layer (4) has a substantially closed structure and is bonded to the rubber backing layer (2).

2. A dust control mat according to claim 1, in which the openings have a width of 0.5-10mm, preferably 1-4mm, more preferably 2-3mm.

3. A dust control mat according to any one of the preceding claims, in which the first fabric layer is a knitted fabric of approximately gauge 11.

4. A dust control mat according to any one of the preceding claims, in which the first fabric layer is made of a multifilament yarn, preferably polyester yam.

5. A dust control mat according to claim 4, in which the first fabric layer is made of a yarn having a decitex of 100-200, preferably 136-167, more preferably approximately 150.

6. A dust control mat according to any one of the preceding claims, in which the second fabric layer is a knitted fabric of approximately gauge 22 or higher.

7. A dust control mat according to any one of the preceding claims, in which the second fabric layer is made of a multifilament yarn, preferably polyester yam.

8. A dust control mat according to claim 7, in which the second fabric layer is made of a yarn having a decitex of 100-200, preferably 136-167, more preferably approximately 150.

9. A dust control mat according to any one of the preceding claims, in which the intermediate pile layer has a thickness of 2-10mm, preferably approximately 4-6mm.

10. A dust control mat according to any one of the preceding claims, in which the intermediate pile layer is made from a monofilament yarn having a diameter in the range 0.04-3mm, preferably 0.05-0.3mm, more preferably 0.1-0.2mm.

11. A dust control mat according to any one of the preceding claims, in which the intermediate pile layer is made from a synthetic monofilament yarn, preferably polyester yam.

12. A dust control mat according to any one of the preceding claims, in which the textile layer is a warp knit fabric, preferably a Raschel knit fabric.

13. A dust control mat according to any one of the preceding claims, wherein the backing layer is made of nitrile rubber.

14. A dust control mat according to any one of the preceding claims, wherein the thickness of the rubber backing layer is from 0.5mm to 5mm, preferably 0.8mm to 3mm.

15. A dust control mat according to any one of the preceding claims, in which the rubber backing layer is vulcanised to the second fabric layer.

16. A dust control mat according to any one of the preceding claims, wherein the textile layer is printed.

17. A dust control mat according to claim 16, in which the textile layer is printed with an image having an observable resolution of at least 75dpi.

18. A dust control mat according to any one of the preceding claims, wherein the textile layer has an area of at least 0.2m², preferably at least 1 m².

19. A method of manufacturing a dust control mat, the method including the steps of bonding a backing layer to a textile layer that includes a spacer fabric having a first fabric layer that forms the upper surface of the mat, a second fabric layer and an intermediate pile layer that interconnects and spaces the first and second fabric layers, said first fabric layer comprising a mesh having a number of openings, wherein the backing layer is made of rubber and is bonded to the second fabric layer, and said second fabric layer has a substantial dosed structure.

20. A method according to claim 19, in which the spacer fabric is a knitted fabric, preferably a warp knitted fabric, more preferably a Rachel knit fabric.

21. A method according to claim 19 or claim 20, wherein the rubber backing layer is vulcanised to the textile layer in a heated press.

22. A method according to any one of claims 19 to 21, wherein the textile layer is printed using a sublimatic printing process.

23. A method according to claim 22 when dependent on claim 21, wherein the textile layer is printed during the backing process.

## Patentansprüche

1. Staubkontrollmatte, die eine Textilschicht (1) und eine Unterschicht (2) aufweist, wobei die Textilschicht ein Distanzmaterial enthält, das eine erste Materialschicht (3), die die Oberfläche der Matte bildet, wobei die erste Materialschicht ein Netz mit einer Anzahl von Öffnungen aufweist, eine zweite Materialschicht (4), die die Unterfläche der Textilschicht bildet, und eine mittlere Florschicht (5) aufweist, die die erste und die zweite Materialschicht verbindet und beabstandet, **dadurch gekennzeichnet, dass** die Unterschicht (2) aus Gummi hergestellt ist, und die zweite Materialschicht (4) einen im Wesentlichen geschlossenen Aufbau aufweist und mit der Gummiunterschicht (2) verbunden ist.

2. Staubkontrollmatte nach Anspruch 1, wobei die Öffnungen eine Breite von 0,5 bis 10 mm, vorzugsweise von 1 bis 4 mm, und insbesondere von 2 bis 3 mm aufweisen.

3. Staubkontrollmatte nach Anspruch 1, wobei die erste Materialschicht ein Gewirke mit einer Gauge-Zahl von etwa 11 ist.

4. Staubkontrollmatte nach einem der vorangehenden Ansprüche, wobei die erste Materialschicht aus einem Multifilgarn, vorzugsweise aus Polyestergarn, hergestellt ist.

5. Staubkontrollmatte nach Anspruch 4, wobei die erste Materialschicht aus einem Garn hergestellt ist, das einen Dezitex von 100 bis 200, vorzugsweise von 135 bis 167, und insbesondere von etwa 150 aufweist.

6. Staubkontrollmatte nach einem der vorangehenden Ansprüche, wobei die zweite Materialschicht ein Gewirke mit einer Gauge-Zahl von etwa 22 oder höher ist.

7. Staubkontrollmatte nach einem der vorangehenden Ansprüche, wobei die zweite Materialschicht aus einem Multifilgarn, vorzugsweise aus Polyestergarn, hergestellt ist.

8. Staubkontrollmatte nach Anspruch 7, wobei die zweite Materialschicht aus einem Garn hergestellt ist, das einen Dezitex von 100 bis 200, vorzugsweise von 136 bis 167, und insbesondere von etwa 150 aufweist.

9. Staubkontrollmatte nach einem der vorangehenden Ansprüche, wobei die mittlere Florschicht eine Stärke von 2 bis 10 mm, vorzugsweise von etwa 4 bis 6 mm aufweist.

10. Staubkontrollmatte nach einem der vorangehenden Ansprüche, wobei die mittlere Florschicht aus einem Monofilgarn hergestellt ist, das einen Durchmesser im Bereich von 0,04 bis 3 mm, vorzugsweise von 0,05 bis 0,3 mm, und insbesondere von 0,1 bis 0,2 mm aufweist.

11. Staubkontrollmatte nach einem der vorangehenden Ansprüche, wobei die mittlere Florschicht aus einem synthetischen Monofilgarn, vorzugsweise aus Polyestergarn, hergestellt ist.

12. Staubkontrollmatte nach einem der vorangehenden Ansprüche, wobei die Textilschicht ein Kettengewirke ist, vorzugsweise ein Raschelgewirke.

13. Staubkontrollmatte nach einem der vorangehenden Ansprüche, wobei die Unterschicht aus Nitrilgummi hergestellt ist.

14. Staubkontrollmatte nach einem der vorangehenden Ansprüche, wobei die Stärke der Gummiunterschicht zwischen 0,5 mm und 5 mm, vorzugsweise zwischen 0,8 mm und 3 mm, liegt.

15. Staubkontrollmatte nach einem der vorangehenden Ansprüche, wobei die Gummiunterschicht an die zweite Materialschicht vulkanisiert ist.

16. Staubkontrollmatte nach einem der vorangehenden Ansprüche, wobei die Textilschicht bedruckt ist.

17. Staubkontrollmatte nach Anspruch 16, wobei die Textilschicht mit einem Bild bedruckt ist, das eine wahrnehmbare Auflösung von wenigstens 75 dpi aufweist.

18. Staubkontrollmatte nach einem der vorangehenden Ansprüche, wobei die Textilschicht eine Fläche von wenigstens 0,2 m², vorzugsweise von wenigstens 1 m², aufweist.

19. Verfahren zum Herstellen einer Staubkontrollmatte, wobei das Verfahren folgenden Schritt umfasst:
Verbinden einer Unterschicht mit einer Textilschicht, die ein Distanzmaterial enthält, das eine erste Materialschicht, die die Oberfläche der Matte bildet, eine zweite Materialschicht, und eine mittlere Florschicht aufweist, die die erste und die zweite Materialschicht miteinander verbindet und beabstandet, wobei die erste Materialschicht ein Netz aufweist, das eine Anzahl von Öffnungen aufweist, wobei die Unterschicht aus Gummi hergestellt ist, und mit der zweiten Materialschicht verbunden ist, und die zweite Materialschicht einen im Wesentlichen geschlossenen Aufbau aufweist.

20. Verfahren nach Anspruch 19, wobei das Distanzmaterial ein Gewirke ist, vorzugsweise ein Kettengewirke, und insbesondere ein Raschelgewirke.

21. Verfahren nach Anspruch 19 oder 20, wobei die Gummiunterschicht in einer Warmpresse an die Textilschicht vulkanisiert wird.

22. Verfahren nach einem der Ansprüche 19 bis 21, wobei die Textilschicht unter Benutzung eines Sublimationsverfahrens bedruckt wird.

23. Verfahren nach Anspruch 22, wenn dieser von Anspruch 21 abhängig ist, wobei die Textilschicht während des Verfahrens zur Ausbildung der Unterschicht bedruckt wird.

## Revendications

1. Tapis antipoussière ayant une couche textile (1) et une sous-couche tissée (2) dans lequel la couche textile comprend un tissu d'espacement ayant une première couche de tissu (3) qui forme la surface supérieure du tapis, ladite première couche de tissu comprenant une maille ayant un certain nombre d'ouvertures, une deuxième couche de tissu (4) qui forme la surface inférieure de la couche textile et une couche de poils intermédiaire (5) qui relie et espace la première et la deuxième couches de tissu, **caractérisé en ce que** la sous-couche tissée (2) est en caoutchouc et que la deuxième couche de tissu (4) a une structure essentiellement fermée et est fixée à la sous-couche tissée en caoutchouc (2).

2. Tapis antipoussière selon la revendication 1 dans lequel les ouvertures ont une largeur de 0,5 à 10 mm, de préférence de 1 à 4 mm et de manière davantage préférée de 2 à 3 mm.

3. Tapis antipoussière selon l'une quelconque des revendications précédentes, dans lequel la première couche de tissu est un tissu tricoté d'un calibre d'environ 11.

4. Tapis antipoussière selon l'une quelconque des revendications précédentes, dans lequel la première couche de tissu se compose d'un fil à plusieurs filaments, de préférence un fil polyester.

5. Tapis antipoussière selon la revendication 4 dans lequel la première couche de tissu se compose d'un fil ayant un decitex de 100 à 200, de préférence de 136 à 167 et de manière davantage préférée d'environ 150.

6. Tapis antipoussière selon l'une quelconque des revendications précédentes, dans lequel la deuxième couche de tissu est un tissu tricoté d'un calibre environ supérieur ou égal à 22.

7. Tapis antipoussière selon l'une quelconque des revendications précédentes, dans lequel la deuxième couche de tissu se compose d'un fil à plusieurs filaments, de préférence un fil polyester.

8. Tapis antipoussière selon la revendication 7 dans lequel la deuxième couche de tissu se compose d'un fil ayant un decitex de 100 à 200, de préférence de 136 à 167 et de manière davantage préférée d'environ 150.

9. Tapis antipoussière selon l'une quelconque des revendications précédentes, dans lequel la couche de poils intermédiaire a une épaisseur de 2 à 10 mm, de préférence d'environ 4 à 6 mm.

10. Tapis antipoussière selon l'une quelconque des revendications précédentes, dans lequel la couche de poils intermédiaire se compose d'un fil à un seul filament ayant un diamètre de l'ordre de 0,04 à 3 mm, de préférence de 0,06 à 0,3 mm et de manière davantage préférée de 0,1 à 0,2 mm.

11. Tapis antipoussière selon l'une quelconque des revendications précédentes, dans lequel la couche de poils intermédiaire se compose d'un fil synthétique à un seul filament, de préférence un fil polyester.

12. Tapis antipoussière selon l'une quelconque des revendications précédentes, dans lequel la couche textile est un tissu à maille tricoté, de préférence un tissu maille Rachel.

13. Tapis antipoussière selon l'une quelconque des revendications précédentes, dans lequel la sous-couche tissée est en caoutchouc nitrile.

14. Tapis antipoussière selon l'une quelconque des revendications précédentes, dans lequel l'épaisseur de la sous-couche tissée en caoutchouc est de 0,5 mm à 5 mm, de préférence de 0,8 mm à 3 mm.

15. Tapis antipoussière selon l'une quelconque des revendications précédentes, dans lequel la sous-couche tissée en caoutchouc est vulcanisée sur la deuxième couche de tissu.

16. Tapis antipoussière selon l'une quelconque des revendications précédentes, dans lequel la couche textile est imprimée.

17. Tapis antipoussière selon la revendication 16 dans lequel la couche textile est imprimée avec une image ayant une résolution visible d'au moins 75 dpi.

18. Tapis antipoussière selon l'une quelconque des revendications précédentes, dans lequel la couche textile a une aire d'au moins 0,2 m², de préférence d'au moins 1 m².

19. Procédé de fabrication d'un tapis antipoussière, procédé comprenant les étapes consistant à fixer une sous-couche tissée sur une couche textile qui comprend un tissu d'espacement ayant une première couche de tissu qui forme la surface supérieure du tapis, une deuxième couche de tissu et une couche de poils intermédiaire qui relie et espace la première et la deuxième couches de tissu, ladite première couche de tissu comprenant une maille ayant un certain nombre d'ouvertures, dans lequel la sous-couche tissée est en caoutchouc et est reliée à la deuxième couche de tissu et dans lequel ladite deuxième couche de tissu a une structure essentiellement fermée.

20. Procédé selon la revendication 19 dans lequel le tissu d'espacement est un tissu tricoté, de préférence un tissu à maille tricoté et de manière davantage préférée un tissu maille Rachel.

21. Procédé selon la revendication 19 ou la revendication 20, dans lequel la sous-couche tissée en caoutchouc est vulcanisée sur la couche textile dans une presse chauffée.

22. Procédé selon l'une quelconque des revendications 19 à 21 dans lequel la couche textile est imprimée à l'aide d'un procédé d'impression sublimatique.

23. Procédé selon la revendication 22 dépendant de la revendication 21, dans lequel la couche textile est imprimée pendant le procédé de renforcement.
